# EUROPÄISCHE PATENTSCHRIFT

(11) **EP 2 784 494 B1**
(45) Veröffentlichungstag und Bekanntmachung des Hinweises auf die Patenterteilung: **30.05.2018**
(21) Anmeldenummer: 13001557.1
(22) Anmeldetag: 26.03.2013
(51) Int. Cl.: G01F 17/00, G01D 5/24, G01N 27/22

(54) **System zur Erkennung und/oder Bestimmung von Körpern oder Stoffen**
System for detecting and/or determination of bodies or materials
Système de reconnaissance et/ou de détermination de corps ou de substances

(43) Veröffentlichungstag der Anmeldung: 01.10.2014
(73) Patentinhaber: Rechner Industrie-Elektronik GmbH, 68623 Lampertheim (DE)
(72) Erfinder: Kohler, Armin, 68623 Lampertheim (DE)
(74) Vertreter: Bill, Burkart Hartmut

(56) Entgegenhaltungen:
- EP-A1- 0 077 595
- EP-A2- 0 152 089
- GB-A- 717 127
- US-A- 4 074 184

## Beschreibung

Die Erfindung betrifft ein System zur Erkennung und/oder Bestimmung von Körpern oder Stoffen, insbesondere zur Erkennung und/oder Volumenbestimmung von Körpern oder Stoffen aus dielektrischem und/oder leitfähigem Material innerhalb einer Messzelle, insbesondere in Art einer Förder- oder Transporteinrichtung oder eines Behälters.

Wegen ihrer Robustheit und Universalität werden kapazitive Sensoren, nachfolgend auch als Messsensoren bezeichnet, in der Technik sehr häufig eingesetzt. Sie können im Prinzip alle Materialien erkennen. Sowohl elektrisch leitfähige wie auch nichtleitfähige Stoffe führen innerhalb elektrischer Felder zu Veränderungen, welche als Kapazitätsänderungen von entsprechend ausgestalteten Messkondensatoranordnungen elektronisch ausgewertet werden können.

Nichtleitfähige Stoffe führen durch ihre spezifischen dielektrischen Wirkungen, als Permittivität bezeichnet, zu Feldänderungen. Stoffe mit hoher Permittivität sind besonders leicht mit kapazitiven Sensoren zu erkennen, mit sinkender Permittivität ist ein größerer Messaufwand erforderlich.

Kapazitive Messeinrichtungen werden grundsätzlich durch Elektrodenanordnungen gebildet, die als ein Messkondensator wirken und mit einer entsprechenden elektronischen Auswerteeinheit verbunden sind. Die zu detektierenden Objekte führen über ihre Wirkungen im elektrischen Feld des Messkondensators zu Kapazitätsänderungen, die in der Auswerteeinheit in die gewünschten Signale umgeformt werden.

Grundsätzlich können die Elektrodenanordnungen beliebig gestaltet werden. Zur Erzielung ausreichend großer Messeffekte sollte jedoch immer eine möglichst große Kapazitätsänderung allein durch die zu detektierenden Objekte bewirkt werden. Das Messfeld sollte möglichst so gestaltet werden, dass parasitäre Effekte maximal unterdrückt werden.

Ausgehend von der Gestaltung der Messkondensatoranordnung lassen sich zwei Grundtypen kapazitiver Messanordnungen erkennen. Das sind zum einen kapazitive Näherungsschalter, zum anderen kapazitive Füllstandsmessungen.

Bei beliebig gestalteten Messkondensatoranordnungen ist eine quantitative Ermittlung der Kapazitätswerte sehr schwierig, meist ist nur eine qualitative Abschätzung möglich. Aus den bekannten Beziehungen lässt sich jedoch ableiten, dass die Kapazitätsänderung annähernd direkt proportional dem Produkt aus Permittivitätszahl εᵣ und Füllfaktor (Ausfüllung des gesamten Messfeldes der Kondensatoranordnung mit dem zu detektierenden Objekt) ist. Weiterhin lässt sich ableiten, dass sich die Kapazitätsänderung annähernd umgekehrt proportional zum Abstand zwischen Elektrode und Objekt verhält.

Damit ist auch eine grobe Zuordnung der Bedeutung dieser qualitativen Zusammenhänge zu den zwei Grundtypen kapazitiver Messanordnungen möglich.

Kapazitive Näherungsschalter arbeiten vorzugsweise mit geringen Abständen zwischen Messsensor und Objekt. Sie haben ihre größte Empfindlichkeit unmittelbar an der Sensoroberfläche bzw. einer aktiven Elektrodenoberfläche. Mit zunehmenden Abstand nimmt die Empfindlichkeit sehr stark ab.

Kapazitive Näherungsschalter besitzen überwiegend eine ebene, in eine Richtung sensitive Oberfläche. Die Richtungswirkung wird durch geeignete Abschirmmaßnahmen zur Rückseite hin bewirkt. Typische Beispiele sind kapazitive Berührungsschalter in Mobilgeräten, Haushaltsgeräten usw., wo der Abstand zwischen Sensoroberfläche und einem menschlichen Finger gegen Null geht. Für eine industrielle Applikation sind aber häufig auch größere Detektionsabstände erforderlich. Je nach Anwendung müssen über Abstände von mehr als 100 mm Objekte erkannt werden. Prinzipbedingt erfordern jedoch größere Schaltabstände größere Sensoroberflächen oder spezielle Bauformen mit zusätzlichen Maßnahmen zur Gestaltung der Messfelder. Die Erkennung von Objekten, z.B. in einer Produktionsstrasse für Karosserieteile oder auf einem Förderband mit verpackten Produktionsgütern lässt sich mit Sensoren nach der Lehre von DE 10 2007 038 225 A1, welche ein hochstabiles Messsystem für extreme Einsatzbedingungen betrifft, lösen. Andere Messprinzipien können hierzu ebenfalls geeignet sein, sofern sie über eine hohe Messempfindlichkeit mit einem genügend weit in die Messzelle reichenden elektrischen Messfeld verfügen. In vielen Fällen bietet der Installationsort für die Messsensoren jedoch nur einen beschränkten Platz und es ist ein mechanischer Schutz der aktiven Sensor- oder Elektrodenoberfläche vor Beschädigungen notwendig. Auch wenn gewöhnliche Näherungssensoren mit relativ kleinen Bauformen oftmals eine zu geringe Messempfindlichkeit aufweisen, kann insbesondere auch deshalb, weil oft unmittelbar am Einbauort für das Sensorgehäuse nur begrenzter Bauraum zu Verfügung steht, davon ausgegangen werden, je kompakter der Sensor, desto besser.

Prinzipiell eignen sich hierfür passive Sensoren, die über eine Zuleitung, z.B. ein Messkabel, mit ihrer Auswerteelektronik verbunden sind. Sie benötigen am Messort keinen zusätzlichen Platz für die Auswerte- und Steuereinheit. Allerdings führen lange Zuleitungslängen auch zu einer Verschlechterung der Messkonstanz, insbesondere wenn an der Auswerte-/Steuereinheit mehrere Sensoren angeschlossen sind.

Ein wesentliches Merkmal kapazitiver Messsensoren ist die Abhängigkeit von parasitären Effekten, wie z.B. Verschmutzungen an der Sensoroberfläche und/oder die Änderung der Umgebungstemperatur. Temperaturänderungen können zu unterschiedlichen elektrischen Eigenschaften des Sensors führen und bereits geringe Materialansätze können bei gewöhnlichen Näherungsschaltern zum Ausfall der Messfunktion führen. Eine Verringerung des Einflusses dieser Effekte kann durch redundante Messungen oder die Nachkalibrierung der Sensoren erfolgen. Eine Nachkalibrierung ist allerdings nur dann sinnvoll, wenn die vorliegenden Bedingungen am Messort und die technischkonstruktiven Parameter des Sensors bekannt sind, und die durch die Messkabel verursachten Änderungen ebenfalls bekannt oder bestenfalls eliminiert werden können.

Ein anderes häufig auftretendes Messproblem ist die Erfassung von Objekten auf einer Fördereinrichtung, z.B. einem Förderband. Mit den bekannten Messsensortypen ist die Detektion dann relativ sicher möglich, wenn die Objekte identisch sind und sich stets an gleichen Positionen relativ zu dem Messsensor befinden. Zudem ist eine gute Abschirmung des Messraums gegenüber äußeren Störungen, z.B. durch ein metallisches oder nichtmetallisches Gehäuse vorteilhaft. Die Erkennung unterschiedlicher Objekte an verschiedenen Positionen ist mit den bekannten kapazitiven Messsensoren nicht möglich.

Eine Fördereinrichtung kann auch eine Rohrleitung oder ein Kanal zur Förderung von Flüssigkeiten oder Schüttgütern sein, bei der ebenfalls Aussagen über die geförderte Menge oder Verteilung des Materials von Interesse sein können. Eine zuverlässige Messung mit gewöhnlichen kapazitiven Messsensoren ist hierbei nicht möglich, da die zu messenden Materialien bei jeder Detektierung ungleichmäßig verteilt sein können bzw. dessen Oberflächenkontur unterschiedlich ausgebildet sein kann. Eine Veränderung der Sensoreigenschaften durch parasitäre Einflüsse, wie Verschmutzungen oder Temperaturänderungen, kann durch eine Nachkalibrierung der Messsensoren während der Messung erfolgen. Der Materialfluss sollte dabei durch die Sensorvorrichtung möglichst nicht gestört werden und der Sensoreinbau möglichst platzsparend ausgeführt sein.

Bei kapazitiven Füllstandsmessungen hingegen, sollte die Messanordnung so gestaltet sein, dass das Messfeld innerhalb eines die Messzelle bildenden Behälters möglichst das gesamte Messgut erfasst. Demzufolge ist hier der Zusammenhang der Kapazitätsänderung in Abhängigkeit vom Füllfaktor für den Messeffekt vorwiegend von Bedeutung.

Die Elektrodenanordnung einer kapazitiven Füllstandsmessung wird typisch durch eine isolierte Stab- oder Seilsonde innerhalb eines leitfähigen Behälters gebildet. Leitfähiger Behälter und Stab bzw. Seil bilden die 2 Elektroden der Messkondensatoranordnung. Damit umfasst das Messfeld idealerweise das gesamte Volumen innerhalb des Behälters. Mit dieser Anordnung sind neben Grenzwertmessungen auch kontinuierliche Messungen möglich.

Füllstandsgrenzwertmessungen sind auch mit an der Behälterwand montierten traditionellen Näherungssensoren möglich. Sie unterliegen jedoch wegen ihrer Störanfälligkeit gegen Anhaftungen großen Einsatzbeschränkungen.

Obwohl allgemein von Füllstandsmessungen gesprochen wird, ist das erwünschte Messergebnis meist das Volumen bzw. die Masse des Füllgutes. Abgesehen von der Behältergeometrie (Querschnittsveränderung über der Füllhöhe), wobei hier eine rechnerische Korrektur leicht möglich ist, treten besonders bei Schüttgütern Probleme auf. Hier kommt es zur Bildung von Schüttkegeln, die u.a. vom Rieselverhalten des Füllgutes und den technologischen Gegebenheiten, wie Eintragsort, Anzahl der Eintragspunkte, Austragsort, Behältergeometrie abhängen und ständigen Veränderungen unterliegen. Man versucht, durch geeignete Montage der Sonde, d.h. des Sensors, z.B. in der Mitte des Schüttkegels diesen Einfluss zu minimieren, kann damit aber bestenfalls bei konstanten technologischen Bedingungen eine Verbesserung erreichen, also z.B. dann, wenn sich ein stabiler Kegel bei permanenter Befüllung aufgebaut hat. Bei gleichzeitiger Befüllung und Leerung gibt es keine stabile Ausbildung der Oberfläche und/oder eine inhomogene Verteilung des Füllgutes im Behälter. Es kann also festgestellt werden, dass bei dem derzeitigen Stand der Technik, besonders bei Behältergeometrien mit einem großen Verhältnis zwischen Querschnittsfläche und Höhe, eine eindeutige Volumenbestimmung für das Füllgut nicht möglich ist. In den Grenzbereichen nahe am Behälterboden sowie am Deckel sind die Fehlaussagen einfacher Füllstandsmessungen besonders gravierend.

Die Lösung für verbesserte Aussagen über die Verteilung und Menge von Materialien oder Objekten in beliebigen Messzellen können ECT-Systeme (engl. Electrical Capacitance Tomography - ECT) bringen, die normalerweise als mehrkanalige Sensorsysteme zur Rekonstruktion von dielektrischen Materialverteilungen innerhalb von Messzellen eingesetzt werden. Durch die Schnittbilder können dann beispielsweise die Geschwindigkeit oder die Durchflussmenge von Materialien ermittelt werden. Mit ECT-Systemen werden u.a. die Position mehrerer dielektrischer Objekte, Öl/Wasser-Gemische, oder Gasblasen in Flüssigkeiten auch in Echtzeit rekonstruiert.

Ein solches System besteht aus einer Mehrelektroden-Sensoranordnung, einer Steuer- und Auswerteeinheit sowie einem Rekonstruktionsprogramm z.B. auf einem PC (Personal Computer). Die Messsensoren verfügen hierbei in bevorzugter Ausführung über mehrere, in ihrem elektrischen Potential umschaltbare Elektroden. Die Elektroden sind dabei peripher um den Querschnitt eines zylindrischen Behälter angeordnet (US 5,130,661, WO97/00453). Es gibt auch ECT-Systeme mit verteilten Elektrodenstrukturen, die eine Volumenmessung in nicht-zylindrischen Behältern ermöglichen (CN 202256239 U, CN 202256236 U, US 2010/0097374 A1).

Die einzelnen Sensoren einer ECT-Sensoranordnung, insbesondere, wenn sie zusätzlich zu Sensorelektroden auch eine Sensorschaltung besitzen, sollten so ausgeführt sein, dass sie geringe Dimensionen aufweisen. Die Sensorelektroden sind aber in allen Fällen von außen auf die dielektrische Wand der Messzelle aufgebracht und messen durch diese in die Messzelle.

Für die volumenhafte kontinuierliche Füllstandmessung in metallischen Behältern mit begrenztem Platz oder, wenn die Geometrie des Behälters stark von der zylindrischen Form abweicht, ist ein Einsatz von Stabsonden oftmals nicht geeignet.

Unabhängig davon für welche der angeführten Applikationen Sensoren eingesetzt werden, kommt es zwangsläufig zu sensorspezifischen Änderungen der Messeigenschaften in Form von z.B. Messwertdriften. Die Ursachen hierfür können unter anderem wie folgt begründet sein: konstruktionsbedingte oder materialbedingte Unterschiede der elektrischen Eigenschaften des Sensors, insbesondere bei sich stark ändernden Umgebungstemperaturen (Bauteiltoleranzen, Materialien, nichtlineare Verstärkerkennlinien), kapazitiver Offset durch parasitäre Kapazitäten, oder durch Verschmutzungen der Sensorflächen im Innenraum der Messzelle, insbesondere bei anhaftenden Medien.

Um verbesserte Volumenaussagen mit mehreren Sensoren machen zu können, müssen alle Sensoren annähernd gleiches Messverhalten besitzen. Dies kann in vielen Fällen nur durch eine Nachkalibrierung während der Messung gewährleistet werden. Die sensorspezifischen Kalibrierdaten sollten natürlich schon vor dem Beginn der Messung bekannt sein oder bei ersten Inbetriebnahme eines Sensors experimentell ermittelt werden. Könnten diese sensorspezifischen Daten im Sensor hinterlegt werden, würde dies eine Nachkalibrierung und auch schnellere Austauschbarkeit sowie einfachere Inbetriebnahme der Sensoren gewährleisten. Das Dokument EP0077595 offenbart ein System gemäß dem Stand der Technik. Eine Aufgabe der Erfindung besteht darin, ein verbessertes System zur Erkennung von Objekten und zur Bestimmung des Volumens von Schüttgütern mit beliebiger Verteilung und/oder Oberflächenstruktur in einer Messzelle, das heißt insbesondere in einem Behälter oder einer Förder- oder Transporteinrichtung, für eine Vielzahl unterschiedlicher messtechnischer Anforderungen, insbesondere bezüglich Messzellenart, Messzellengeometrie und physikalischer Umgebungsbedingungen, bereitzustellen.

Nachfolgend werden daher die Begriffe "Behälter, Förder- oder Transporteinrichtung, Rohrleitung, Kanal, Förderkanal, Förderleitung, etc. ", sofern nichts anderes angegeben ist, allgemein unter dem Begriff "Messzelle" mit umfasst.

Eine weitere Aufgabe der Erfindung ist es, eine platzsparende Montage von Messsensoren in Messzellen zu gewährleisten. Zweckmäßig sollten daher ein Messsensor oder auch mehrere Messsensoren nur einen geringen Raum einnehmen.

Darüber hinaus sollten Messsensoren sich in Messzellen besser als herkömmliche, meist zylinderförmige Näherungsschalter mit kleiner sensitiver Stirnfläche unterbringen lassen sowie eine bedeutend größere Empfindlichkeit in größerer Entfernung zum Messsensor besitzen.

Als eine Lösung schlägt die Erfindung hierzu einen Gegenstand mit den Merkmalen des anhängigen unabhängigen Anspruchs vor. Zweckmäßige Ausgestaltungen und Weiterbildungen sind Gegenstand der abhängigen Ansprüche.

Demgemäß schlägt die Erfindung als Messsystem insbesondere ein System zur Erkennung und/oder Volumenbestimmung von Körpern oder Stoffen aus dielektrischem und/oder leitfähigem Material innerhalb einer Messzelle, insbesondere in Art einer Förder- oder Transporteinrichtung oder eines Behälters, vor, welches wenigstens einen kapazitiven Messsensor mit wenigstens einem flexiblen oder starren Isolator umfasst, wobei der Isolator wenigstens teilweise mit mindestens einer, insbesondere elektrisch leitfähigen, Sensorelektrode ausgebildet ist, die eine aktive Elektrodenoberfläche aufweist, wobei die mindestens eine Sensorelektrode in den Isolator wenigstens teilweise integriert oder auf diesem aufgebracht ist.

Des Weiteren umfasst das erfindungsgemäße Messsystem eine Messzelle mit einem Innenraum und einer leitfähigen und/oder nichtleitfähigen Messzellenwand, die eine in den Innenraum der Messzelle gerichtete Oberfläche aufweist.

Erfindungsgemäß ist der kapazitive Messsensor derart in eine Ausnehmung in der Messzellenwand integriert, so dass die aktive Elektrodenoberfläche des Messsensors wenigstens einen Teil der in den Innenraum gerichteten Oberfläche der Messzellenwand ersetzt.

Das erfindungsgemäße Messsystem hat folglich den Vorteil, dass der Messsensor mitsamt der Sensorelektrode und gegebenenfalls einer zusätzlichen Sensorelektronik wenn überhaupt nur einen äußerst geringen Raum bzw. Platz vom Innenraum der Messzelle einnimmt.

Ferner können mit der Erfindung, auch verbesserte (quasi-) tomographische Aussagen über die Material- und/oder Objektverteilung in einer Messzelle ermöglicht werden.

Das erfindungsgemäße Messsystem kann dabei in bevorzugter Ausführungsform so gestaltet sein, dass der oder die Messsensor(en) bündig mit der in den Innenraum einer Messzelle gerichteten Messzellenwand abschließt, wobei in weiterer bevorzugter Ausführungsform die Sensorelektrode wenigstens eines Messsensors gegenüber der Messzellenwand elektrisch isoliert und in ihrem elektrischen Potential umschaltbar ist.

In einer bevorzugten Ausgestaltung des erfindungsgemäßen Messsystems, in der insbesondere der Installationsort für den Messsensor nur einen beschränkten Platz bietet und ein mechanischer Schutz der aktiven Elektrodenoberfläche vor Beschädigungen notwendig ist, ist die Elektrodenoberfläche der Sensorelektrode des Messsensors bündig mit der Messzellenwand montiert.

Die Ausnehmung zur Aufnahme des Messsensors in der Messzellenwand kann ferner als mindestens eine durch die Messzellenwand hindurch reichende Aussparung oder auch als eine Ausnehmung ausgebildet sein, die lediglich in die Innenwand der Messzelle eingebracht ist. Die Aussparung kann im Wesentlichen der Form der Elektrodenanordnung und/oder dem Isolator oder einer Leiterplatte, entsprechen.

Um sich den geometrischen Gegebenheiten optimal anpassen zu können und eine weit in den Innenraum der Messzelle reichende Messcharakteristik zu erreichen, bietet es sich in einer bevorzugten Ausführungsform der Erfindung ferner an, den Messsensor als einen Flächensensor auszugestalten. Hierbei kann vorteilhaft der Effekt genutzt werden, dass eine maximale Kapazitätsänderung bei Übereinstimmung von Objektgröße und Messelektrode eintritt.

Ein derartiger Flächensensor kann als starren oder flexiblen Isolator einen plattenartigen Isolator aufweisen, und dessen aktive Elektrodenoberfläche kann optimal an die Messbedingungen von zu erfassenden Objekten angepasst sein. Durch einen bündigen Einbau an der Innenseite einer Messzellenwand wird ferner der Förder- oder Transportprozess in der Messzelle nicht beeinflusst. Ein derartiger plattenartiger Isolator kann z.B. ferner auch gleichzeitig mit Leiterbahnen versehen sein und folglich zusätzlich als Leiterplatte fungieren.

In weiteren Ausführungsformen hierzu, ist ein, insbesondere kompakter, Flächensensor peripher um die Messzelle angeordnet und/oder bündig mit der Messzellenwand montiert bzw. bündig an der Innenseite der Messzellenwand, wobei die Oberfläche der Messzellenwand, in welche die Ausnehmung eingebracht ist, auch Teil eines Deckels oder eines Bodens der Messzelle sein kann.

In bevorzugter Ausgestaltung des erfindungsgemäßen Messsystems ist wenigstens die Sensorelektrode, insbesondere jedoch der gesamte Messsensor, in der Ausnehmung in der Messzellenwand vollständig integriert.

Ein Messsensor wird somit, bevorzugt durch die Messzellenwand von außen, in der Art fixiert, dass deren, insbesondere isolierte, Sensorelektrode zumindest teilweise die Messzelleninnenwand bildet, wobei diese Messzelleninnenwand dann gegebenenfalls zumindest teilweise den Messzellendeckel oder -boden bildet.

Die Messelektroden können demnach bevorzugt auch in einer metallischen Messzellenwand positioniert werden. Die Messelektroden können in weiterer Ausgestaltung der Erfindung, insbesondere in Abhängigkeit des Messguts, auch hinter einer zusätzlich im Innenraum angeordneten nichtleitfähigen Wandung angebracht sein. Dabei ist jedoch zu berücksichtigen, dass in diesem Fall diese Wandung einen parasitären Teil des Messfeldes bildet und die Messempfindlichkeit beeinflussen kann.

In einer Alternative oder einer weiteren Ausgestaltung der Erfindung kann die Ausnehmung in der Oberfläche der Messzellenwand derart eingebracht und so gestaltet sein, dass der Messsensor über den Innenraum der Messzelle in die Ausnehmung eingebracht ist. Ferner ist ein Messsensor zweckmäßig in einem Montageeinsatz montiert, welcher dann in die Ausnehmung in der Messzellenwand eingesetzt ist.

Vorteilhaft ist es ferner, wenn ein erfindungsgemäßes Messsystem dahingehend ausgestaltet ist, dass der Messsensor zusätzlich auch eine Sensorelektronik aufweist, die mit der Sensorelektrode, insbesondere elektrisch, verbunden ist und/oder eine kompakte Einheit, insbesondere in einem wenigstens teilweise geschlossenen Gehäuse, bildet.

Eine Sensorelektronik ist zweckmäßig dazu ausgebildet, eine Messwertaufbereitung, insbesondere eine Analog-/Digital-Wandlung (A/D-Wandlung) und/oder eine Messwertverstärkung, und/oder eine Umschaltung von Elektrodenpotentialen und/oder eine Kompensation von parasitären Messeffekten zu unterstützen.

Zur Erhöhung der Messgenauigkeit, beispielsweise bei Änderung der Oberflächenkontur des Messguts bei einer Entleerung oder einer Befüllung der Messzelle, können in einer bevorzugten, vorteilhaften Ausführungsform der Erfindung auch mehrere Messsensoren jeweils als eine kompakte Einheit aus Sensorelektrode und Sensorelektronik entlang der Messzellenwand angeordnet sein. Die Messsignale können somit entweder einzeln verarbeitet und gegebenenfalls im Rahmen einer Nachkalibrierung korrigiert werden, oder gemeinsam zur Weiterverarbeitung, insbesondere für tomographische Aussagen nach dem Prinzip der ECT, verwendet werden.

In einer bevorzugten Ausführungsform des erfindungsgemäßen Messsystems sind ferner mehrere der Messsensoren, insbesondere zur Füllstandsmessung von Schüttgütern und Flüssigkeiten, in metallischen oder nichtmetallischen, als Behälter ausgebildeten Messzellen eingebracht, wobei in zweckmäßiger Weiterbildung wiederum jeweils die Sensorelektrode und eine Sensorelektronik eine kompakte Einheit bilden.

In einer weiteren Ausführungsform der Erfindung ist ein Messsensor somit als ein kompakter Flächensensor ausgebildet, bei dem die Sensorelektrode und die Sensorelektronik in einer unmittelbaren Nähe zueinander angeordnet ist und somit bevorzugt eine Einheit bilden.

In einer weiteren bevorzugten Ausführungsform des erfindungsgemäßen Messsystems ist die Sensorelektronik wenigstens teilweise, insbesondere vollständig, in dem Isolator integriert und/oder in oder auf einer Leiterplatte untergebracht.

Zweckmäßig ist ferner, wenn die Sensorelektrode und/oder die Sensorelektronik mit einer entfernten, insbesondere übergeordneten, Steuer-/Auswerteeinheit, verbindbar ist. Dies kann grundsätzlich je nach spezifischer Ausgestaltung der miteinander zu verbindenden Teile über eine Zuleitung und also drahtgebunden oder alternativ drahtlos, z.B. über eine Funkverbindung erfolgen.

Für identisches Sensorverhalten kann eine kontinuierliche Nachkalibrierung der Messsensoren notwendig sein. Dazu kann in einer bevorzugten Ausführungsform der Erfindung entweder der, als eine kompakte Einheit mit einer Sensorelektronik ausgebildete, Messsensor und/oder die Sensorelektronik ausgebildet sein, eine Nachkalibrierung durchzuführen oder zumindest eindeutig von einer übergeordneten Steuer-/ Auswerteeinheit identifiziert zu werden. Die Steuer-/ Auswerteeinheit ist in diesem Fall dann zweckmäßig ausgebildet, eine Korrektur der sensorspezifischen Messdaten vorzunehmen.

Als Sensorelektronik ist bevorzugt eine Messschaltung zu verstehen. Die Sensorelektronik kann aber auch nur ein Speicher und/oder eine Speicherschaltung für Sensordaten sein, wodurch es einer verbundenen und entsprechend ausgebildeten Steuer-/ Auswerteeinheit ermöglicht ist, die Identität eines angeschlossenen Messsensors anhand von in dem Speicher und/oder der Speicherschaltung hinterlegter Identifikationsdaten zu erkennen und/oder welche sensorspezifischen Daten (z.B. temperaturabhängige Kalibrierdaten) in dem Speicher und/oder der Speicherschaltung hinterlegt sind. Dies bietet z.B. den Vorteil, dass ein Messsensor von einer angeschlossenen Steuer-/Auswerteeinheit eindeutig identifiziert werden kann und, dass eine sensorspezifische Nachkalibrierung oder Signalaufbereitung der Messwerte erfolgen kann. Ferner wird eine schnellere Austauschbarkeit und eine einfache Inbetriebnahme des erfindungsgemäßen Messsystems ermöglicht.

Insbesondere bei hohen Temperaturen in der Messzelle kann es in einer besonderen Ausgestaltung der Erfindung auch vorteilhaft sein, die Sensorelektronik vom Sensor abzusetzen, beispielsweise an einer weg von der Messzelle gerichteten Sensoraußenseite, in der Zuleitung und/oder an einer Messzellenaußenseite, und/oder die Sensoren auf Basis geeigneter Leiterplattenmaterialien wie Hochtemperatur-FR4, -FR5 oder Keramikverbundmaterialien aufzubauen.

Gegebenenfalls könnten in den Sensoren passive Bauelemente integriert sein, um zweckmäßiger Weise die am Sensor vorherrschenden Umgebungsbedingungen zu erfassen. Für eine Temperaturkompensation können beispielsweise PT100-Fühler oder Dioden eingesetzt werden.

In einer besonderen Ausgestaltung der Erfindung ist als eine Sensorzuleitung zur Verbindung des Messsensors mit einer Sensorelektronik und/oder der Steuer-/Auswerteeinheit ein koaxiales, triaxiales oder mehradriges Kabel vorgesehen. Ist in der zuvor erwähnten Alternative keine Zuleitung zu der Sensorelektronik und/oder dem Steuer-/Auswerteeinheit umfasst, können in diesem Fall der Messsensor, eine Sensorelektronik und/oder eine übergeordnete Steuer-/Auswerteeinheit über eine drahtlose Verbindung, insbesondere Funkverbindung, kommunizieren und zweckmäßig Daten jeglicher Art empfangen und/oder senden.

In einer weiteren besonders bevorzugten Ausgestaltung der Erfindung ist von dem wenigstens einen Messsensor mindestens ein Messsensor umfasst, dessen Sensorelektrode gegenüber der Messzellenwand isoliert ist und an die unterschiedliche Potentiale anlegbar sind. Um somit tomographische Aussagen über die Materialverteilung zu ermitteln, ist es ferner zweckmäßig, dass das erfindungsgemäße Messsytem wenigstens eine Umschalteinrichtung umfasst, welche die Umschaltung zwischen unterschiedlichen Potentialen an Sensorelektroden, an die unterschiedliche Potentiale anlegbar sind, bewirkt.

Die Erfindung wird nachfolgend anhand einiger bevorzugter, jedoch lediglich beispielhafter Ausführungsformen unter Bezugnahme auf die beigefügten Zeichnungen näher beschrieben.

In den Zeichnungen zeigen:
Fig.1 eine Querschnittsansicht eines erfindungsgemäßen Messsystems mit einer als Förderband ausgebildeten Messzelle,
Fig.2 eine Querschnittsansicht eines erfindungsgemäßen Messsystems mit einer als Förderkanal ausgebildeten Messzelle,
Fig.3 einen Querschnitt durch eine Draufsicht eines erfindungsgemäßen Messsystems mit einer als Behälter ausgebildeten, mit Schüttgut gefüllten Messzelle, und
Fig.4 eine Schnittansicht entlang der Schnittlinie A-A des erfindungsgemäßen Messsystems gemäß Fig. 3.

Nachfolgend werden unter Bezugnahme auf die Zeichnungen einige bevorzugte Ausführungsformen im Rahmen der Erfindung beschrieben, wobei gleiche oder gleichwirkende Komponenten zumindest teilweise mit denselben Bezugszeichen belegt sind.

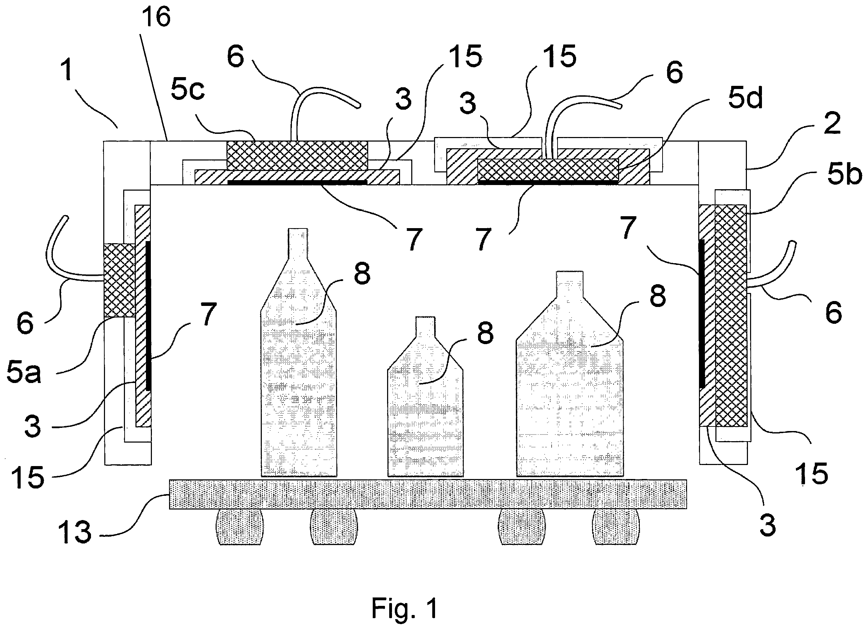

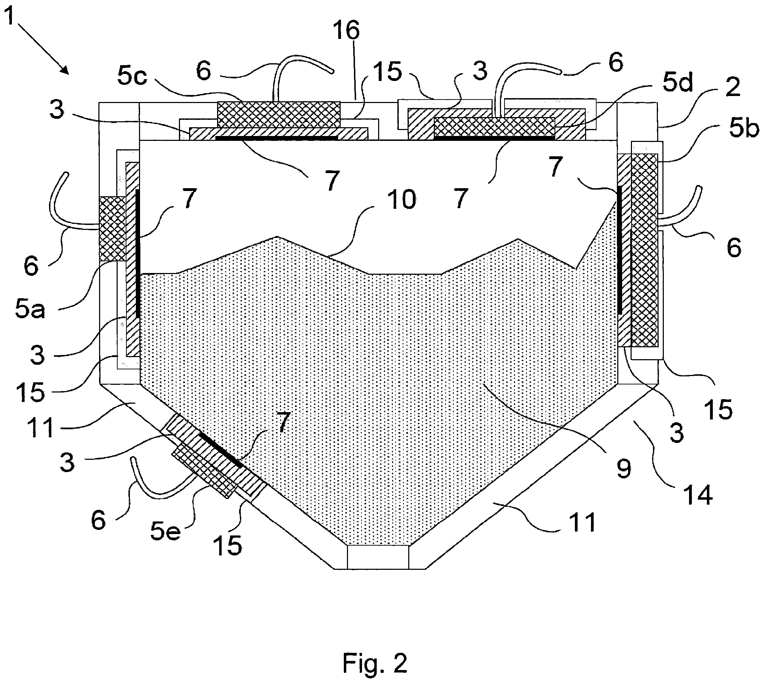

Die Ausführungsformen des erfindungsgemäßen Messsystems nach den Figuren 1 und 2 zeigen jeweils Messzellen 1, welche in Art von Förder- oder Transporteinrichtungen ausgebildet sind und welche sich zur Erkennung und/oder Volumenbestimmung von Körpern oder Stoffen aus dielektrischem Material 8 bzw. 9 eignen, welche in einer derartigen Messzelle 1 gefördert, transportiert und/oder, insbesondere zeitweise ruhend, aufbewahrt werden.

Figur 1 zeigt in einer Querschnittsansicht die Ausführungsform eines erfindungsgemäßes Systems zur Erkennung bzw. Erfassung von Körpern oder Stoffen aus dielektrischem und/oder leitfähigen Material, gemäß Fig. 1 von Messobjekten 8, wie z.B. von Flaschen, innerhalb einer Messzelle 1, die in Art einer Förder- oder Transporteinrichtung zum Fördern oder Transportieren von unterschiedlicher oder gleicher Arten von Messobjekten 8 auf einem Förderband 13 ausgebildet ist, wobei eine Applikation von verteilten Messsensoren zur Erkennung der Messobjekte 8 Anwendung findet. Ein derartiges Messsystem eignet sich zur Erkennung, und also zur Erfassung von Messobjekten 8 an unterschiedlichen Positionen innerhalb einer Messzelle 1, z.B. auf einem Förderband 13.

Die Messzelle 1 weist eine Messzellenwand 2, 16 auf, die leitfähig, gering leitfähig oder nichtleitfähig sein kann, und die eine in den Innenraum der Messzelle 1 gerichtete Oberfläche aufweist. Die Messzellenwand 2 bildet hierbei zwei seitliche Messzellenwandbereiche und die Messzellenwand 16 einen Deckel der Messzelle 1.

Die Messzellenwand 2, 16 besitzt wenigstens eine Ausnehmung, zweckmäßig mehrere Ausnehmungen, in welche jeweils ein kapazitiver Messsensor integriert ist.

Das erfindungsgemäße Messsystem gemäß Figur 1 umfasst vier Ausnehmungen und somit vier kapazitive Messsensoren. Jeder Messsensor besitzt einen Isolator 3, wobei auch in Abwandlung auch mehrere Isolatoren von einem Messsensor umfasst sein können. Ein Isolator kann aus einem flexiblen oder starren Material hergestellt sein. Als Isolatoren eignen sich jegliche dielektrische oder nichtleitende Materialien.

In der Ausführungsform des erfindungsgemäßen Messsystems nach Figur 1 handelt es sich bei dem Isolator 3 jeweils um einen im Wesentlichen plattenartigen Isolator. Dieser kann z.B. zusätzlich mit Leiterbahnen versehen sein und folglich gleichzeitig eine Leiterplatte sein. Hierfür geeignete Materialen können z.B. Hochtemperatur-FR4, -FR5 oder ein Keramikverbundmaterial sein.

Jeder Isolator 3 der vier Messsensoren gemäß Figur 1 ist ferner wenigstens teilweise mit einer Sensorelektrode 7 ausgebildet, die eine aktive Elektrodenoberfläche aufweist, die zu den Messobjekten 8 hin, das heißt in den Innenraum der Messzelle 1 und also gemäß Figur 1 zu den Flaschen bzw. dem Förderband 13, ausgerichtet ist. In Abwandlung zur Fig. 1 kann ein Isolator 3 jedoch auch mehrere Sensorelektroden 7 aufweisen.

Gemäß Figur 1 sind die Sensorelektroden 7 der vier Messsensoren in den Isolator 3 integriert, sie können jedoch in Abwandlung auch nur teilweise integriert sein oder auf dem aufgebracht sein, so dass zumindest die aktive Elektrodenoberfläche über den Isolator 3 hinaus geringfügig in den Innraum der Messzelle 1 ragt.

Die aktive Elektrodenoberfläche eines jeden Messsensors ersetzt jeweils einen Teil der in den Innenraum gerichteten Oberfläche der Messzellenwand 2 oder 16. Eine aktive Elektrodenoberfläche kann hierbei auch größer oder kleiner dimensioniert sein, so dass z.B. die beiden Elektrodenoberflächen der gemäß Fig. 1 im Deckel 16 integrierten Sensorelektroden durch eine einzige Elektrodenoberfläche ersetzt werden oder z.B. eine der Elektrodenoberflächen der gemäß Fig. 1 in einer seitlichen Messzellenwand 2 integrierten Sensorelektrode durch mehrere Elektrodenoberflächen ersetzt wird.

Gemäß bevorzugter Ausführungsform nach Fig. 1 besitzen die an vier unterschiedlichen Sensorpositionen angeordneten Messsensoren jeweils eine Sensorelektronik 5a, 5b, 5c, 5d die jeweils mit der Sensorelektrode 7 eines Sensors verbunden, insbesondere elektrisch, verbunden ist, welches jedoch aus Gründen der Übersichtlichkeit in den Figuren nicht näher dargestellt ist.

Die mit 5d gekennzeichnete Sensorelektronik ist im Isolator 3 vollständig integriert ist. In Abwandlung hierzu kann eine Sensorelektronik auch lediglich teilweise in einem Isolator integriert sein und/oder in oder auf einer Leiterplatte untergebracht sein.

So kann z.B. der zur Sensorelektronik 5d gehörende Isolator 3, wie zuvor beschrieben, darüber hinaus auch als Leiterplatte ausgebildet sein.

Die mit 5a, 5b und 5c gekennzeichneten Sensorelektroniken sind jeweils auf einem Isolator 3 aufgebracht, die gleichermaßen als Leiterplatte ausgebildet sein können. In Abwandlung hierzu kann eine Sensorelektronik aber auch in oder auf einer zusätzlichen Leiterplatte untergebracht sein, welche zweckmäßig dann wiederum an einem Isolator 3 angeordnet ist.

Figur 1 zeigt ferner, dass die Ausnehmungen in der Oberfläche der Messzellenwand 2 und 16 zur Einbringung der Sensoren, welche die Sensorelektronik 5a oder 5c besitzen so eingebracht und gestaltet sind, dass diese Messsensoren nur über den Innenraum der Messzelle 1 in die Ausnehmung eingebracht sind.

Die Messsensoren, welche die Sensorelektronik 5b oder 5d besitzen, können hingegen grundsätzlich auch von außerhalb der Messzelle 1 in die Ausnehmung in der Messzellenwand 2 und 16 eingebracht sein.

Figur 1 zeigt darüber hinaus eine besonders bevorzugte Ausführungsform des erfindungsgemäßen Messsystems, bei welchem die Messsensoren zusätzlich in einem Montageeinsatz 15 montiert sind, der wiederum in die jeweilige Ausnehmung eingesetzt ist und in der Messzellenwand 2 fixiert ist.

Zur Montage eines Sensors in einem Montageeinsatz 15 kann dieser z.B. einen Isolator 3 und/oder eine Steuerelektronik 5b umgreifen und z.B. miteinander verklebt sein. Auch kann der Montageinsatz 15 eine Ausnehmung für wenigstens einen Teil einer Steuerelektronik 5a aufweisen.

Wird zunächst der Sensor in einem Montageeinsatz montiert und anschließend in der Messzellenwand 2, 16 fixiert, können in diesem Fall die Messsensoren, welche die Sensorelektronik 5b oder 5d besitzen, nur von außerhalb der Messzelle 1 in die Ausnehmung in der Messzellenwand 2 und 16 eingebracht sein. Wird zunächst der Montageeinsatz 15 in der Messzellenwand 2, 16 fixiert und anschließend der Sensor im Montageeinsatz montiert, können in diesem Fall die Messsensoren, welche die Sensorelektronik 5b oder 5d besitzen, nur von innerhalb der Messzelle 1 in die Ausnehmung in der Messzellenwand 2 und 16 eingebracht sein.

Zum Fixieren des Sensors in der Ausnehmung oder im Montageeinsatz sowie zum Fixieren eines Montageeinsatzes in einer Ausnehmung können je nach Anwendung z.B. Presspassungen, Klebemittel oder auch andere Fügeverbindungen oder Fügemittel eingesetzt werden.

Ferner ist der Fig. 1 zu entnehmen, dass z.B. die Sensorelektronik 5d mit der zugehörigen Sensorelektrode 7 eine kompakte Einheit bildet. Hierbei bildet der zugehörige Isolator 3 und/oder Montageeinsatz 15 ferner ein wenigstens teilweise geschlossenen Gehäuse.

Insbesondere bei hohen Temperaturen in der Messzelle kann es jedoch auch vorteilhaft sein, die Sensorelektronik vom Sensor abzusetzen, beispielsweise an einer weg von der Messzelle gerichteten Sensoraußenseite, wie dies z.B. bei der Sensorelektronik 5a und 5c der Fall ist. In weiterer, nicht dargestellter Abwandlung kann die Sensorelektronik jedoch auch in einer Zuleitung 6 zur Verbindung der Sensorelektrode und/oder der Sensorelektronik mit einer entfernten, insbesondere übergeordneten, nicht dargestellten Steuer-/Auswerteeinheit und/oder an einer Außenseite der Messzelle 1 angeordnet sein.

Für eine solche Zuleitung zur Verbindung des Sensors mit einer Sensorelektronik und/oder einer Steuer-/Auswerteeinheit kann ein koaxiales, triaxiales oder mehradriges Kabel vorgesehen sein.

Eine Verbindung mit einer entfernten, insbesondere übergeordneten, nicht dargestellten Steuer-/Auswerteeinheit kann alternativ jedoch auch drahtlos, z.B. über eine Funkverbindung erfolgen.

Das vorstehend beschriebene Ausführungsbeispiel eines Messsystems gemäß der Erfindung kann neben der Erkennung von unterschiedlichsten Messobjekten 8 z.B. auch zur Erfassung von deren unterschiedlichen Oberflächenkonturen dienen. Die Messobjekte 8 können ferner auch schüttfähige Materialien, wie beispielsweise Füllgut sein, deren Volumen durch das Messsystem gemäß der Erfindung zu bestimmen ist.

Figur 2 zeigt in Querschnittsansicht eine weitere Ausführungsform eines erfindungsgemäßen Messsystems, mit einer Applikation von verteilten Messsensoren. Diese Ausführungsform dient insbesondere zur Volumenbestimmung von Körpern oder Stoffen aus dielektrischem und/oder leitfähigen Material, im dargestellten Fall von Füllgut 9, innerhalb einer Messzelle 1, die in Art einer Fördereinrichtung, insbesondere als Förderkanal 14 zur Förderung von Flüssigkeiten oder Schüttgütern ausgebildet ist. Diese Ausführungsform ermöglicht Aussagen über die geförderte Menge, Masse oder Verteilung des Materials 9.

Abgesehen davon, dass im Gegensatz zur Ausführung nach Fig. 1 nunmehr gemäß Fig. 2 fünf kapazitive Messsensoren in hierfür vorgesehene Ausnehmungen der Messzellenwand 2, 11, und 16 eingesetzt sind, bildet die Messzellenwand 11 einen Boden der Messzelle 1 aus, so dass auch in diesem ein Sensor eingesetzt ist. Der grundsätzliche Aufbau der in der Messzellenwand 2 und 16 eingesetzten Sensoren sowie deren Aufnahme in entsprechende Ausnehmungen entspricht im Wesentlichen gemäß Fig. 1. Auch der weitere, in der Messzellenwand 11 eingesetzte Sensor weist zweckmäßig eine Sensorelektronik 5e auf und entspricht in seinem Aufbau somit im Wesentlichen dem in Bezug auf Fig. 1 beschriebenen Aufbau. Die Sensorelektronik 5e ragt jedoch zusätzlich über die Messzellenaußenseite hinaus.

Ferner ist der Fig. 2 zu entnehmen, dass nicht nur Messsensoren in Rahmen der Erfindung eingesetzt werden können, die berührungslos in Bezug auf ein Messobjekt in einer Messzellenwand angeordnet sind, wie bei Fig. 1, sondern auch Messsensoren, die das Messobjekt produktberührend erfassen, wie z.B. der in der Messzellenwand 11 eingesetzte Sensor mit zugehöriger Sensorelektronik 5e.

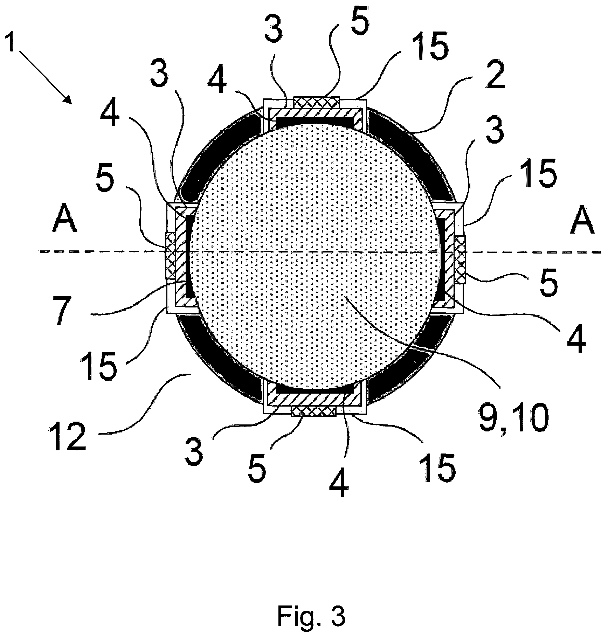

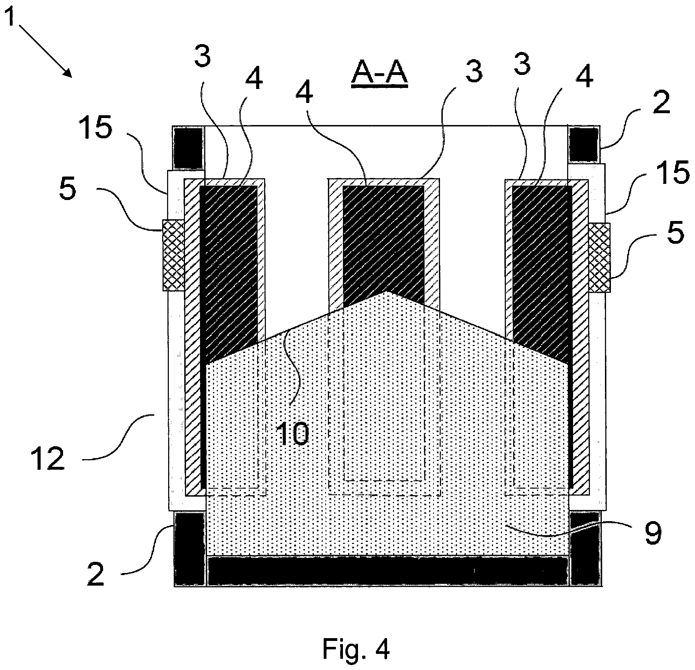

Die Fign. 3 und 4 zeigen eine Ausführungsform des erfindungsgemäßen Messsystems mit einer Messzelle 1 in Art eines zylinderförmigen Behälters 12 zur Volumenbestimmung und/oder Massenbestimmung von Körpern oder Stoffen aus dielektrischem Material 9 in dem Behälter 12, wobei Fig. 3 einen Querschnitt durch eine Draufsicht auf den Behälter 12 und Fig. 4 eine Schnittansicht entlang der Schnittlinie A-A gemäß Fig. 3 zeigt.

Je nach Befüllungs- oder Entleerungszustand des Materials 9 in dem Behälter 12 kann ein derartiges Füllgut einen unterschiedlichen Schüttkegel und somit eine variierende Materialgrenze bzw. Materialoberfläche 10 in dem Behälter 12 aufweisen.

Das erfindungsgemäße Messsystem umfasst in bevorzugter Ausbildung wenigstens vier kapazitive Messsensoren, deren grundsätzliche Aufbau sowie deren Aufnahme in entsprechende Ausnehmungen der Messzellenwand 2 entspricht im Wesentlichen gemäß Fig. 1. Die Sensoren besitzen zweckmäßig wiederum eine jeweils zugehörige Sensorelektronik 5, die ähnlich zur Sensorelektronik 5e gemäß Fig. geringfügig über die Messzellenaußenseite hinausragt. Ferner sind die Sensorelektronik 5 zweckmäßig ausgebildet, drahtlos mit einer nicht dargestellten Steuer-/Auswerteeinheit zu kommunizieren.

In weiterer Abwandlung zu den Ausführungsformen nach Fig. 1 und 2 sind bevorzugt alle Messsensoren gemäß der Figuren 3 und 4 jeweils mit wenigstens einer Sensorelektrode 4 ausgebildet, deren aktive Elektrodenoberfläche zu dem Füllgut 9 in den Innenraum des Behälters 12 hin ausgerichtet ist und eine gekrümmte Oberfläche entsprechend dem Innenradius des Behälters 12 aufweist. Darüber hinaus sind die Sensorelektrode 4 flächenhaft ausgebildet und weisen eine Länge auf, die sich im Wesentlichen entlang der gesamten Höhe des Zylindermantels des zylinderförmigen Behälters 12 erstreckt.

Darüber sind in weiterer Abwandlung zu den Ausführungsformen nach Fig. 1 und 2 die Sensorelektroden 4 nicht nur gegenüber der Messzellenwand 2 isoliert sondern ferner in Bezug auf deren anlegbares Potential umschaltbar ausgebildet, d.h. dass an die Sensorelektroden 4 unterschiedliche elektrische Potentiale anlegbar sind.

Hierzu ist zweckmäßig, z.B. in der Sensorelektronik 5 und/oder einer nicht dargestellten Steuer-/Auswerteeinheit, eine Umschalteinrichtung umfasst, welche die Umschaltung zwischen unterschiedlichen Potentialen an den umschaltbaren Sensorelektroden 4 an die unterschiedliche Potentiale anlegbar sind, bewirkt, z.B. um tomographische Aussagen über die Materialverteilung des Messobjekts oder Materials 9 zu ermitteln. Hierfür kann insbesondere nach dem ECT-Messprinzip vorgegangen werden.

Es sei darauf hingewiesen, dass hierfür nicht zwingend alle Sensorelektroden 4 umschaltbar ausgebildet sein. Je nach Anwendung kann es ausreichend sein lediglich eine umschaltbar ausgebildete Sensorelektrode vorzusehen.

In Bezug auf alle vorbeschriebenen Ausführungsformen weist die Sensorelektronik 5, 5a, 5b, 5c, 5d, 5e in bevorzugter Ausbildung einen Speicher oder eine Speicherschaltung auf, in welchem bzw. in welcher Daten zur Identifizierung des Messsensors und/oder sensorspezifische Daten, insbesondere Kalibrierdaten, abgelegt sind. Bei Kopplung des Messsensors an eine übergeordnete Steuer-/Auswerteeinheit ist hierdurch eine eindeutige Identifizierung des Messsensors durch die Steuer-/Auswerteeinheit ermöglicht und/oder sind dieser Steuer-/Auswerteeinheit die sensorspezifischen Daten zur Verfügung gestellt. Die gewährleistet über dies eine Nachkalibrierung und auch schnellere Austauschbarkeit sowie einfachere Inbetriebnahme der Sensoren.

Zweckmäßig ist ferner die Sensorelektronik dazu ausgebildet, eine Messwertaufbereitung, insbesondere eine Analog- Digital-Wandlung (A/D-Wandlung) und/oder eine Messwertverstärkung, und/oder eine Umschaltung von Elektrodenpotentialen und/oder eine Kompensation von parasitären Messeffekten zu unterstützen.

Ferner ist allen vorbeschriebenen Ausführungsformen nach den Figuren 1 bis 4 zu entnehmen, dass die Messsensoren zweckmäßig derart in Ausnehmungen einer Messzellenwand 2, 11, 16 eingebracht sind, dass die jeweils aktive Elektrodenoberfläche eines Messsensors einen Teil der in den Innenraum gerichteten Oberfläche der Messzellenwand 2, 11, 16 ersetzt und die aktive Elektrodenoberfläche jeder Sensorelektrode bündig, zumindest jedoch im Wesentlichen bündig mit der Messzellenwand bzw. deren Oberfläche montiert ist. Auch eine, einem jeweiligen Sensor zugewiesene Sensorelektronik kann somit in vorteilhafter und einfacher Weise zusammen mit dem Sensor eine kompakte Einheit bilden, ohne im Innenraum einer Messzelle Störungen ausgesetzt zu sein oder zu verursachen. Da auch eine solche kompakte Einheit im Wesentlichen vollständig in eine Ausnehmung der Messzellenwand integrierbar ist, benötigt die Sensorelektronik weder innerhalb oder außerhalb der Messzelle zwingend zusätzlichen Platz.

### Bezugszeichen:

- 1: Messzelle
- 2: seitliche Messzellenwand
- 3: Isolator
- 4: umschaltbare Sensorelektrode
- 5, 5a bis 5e: Sensorelektronik
- 6: Sensorzuleitung
- 7: Sensorelektrode
- 8: Messobjekt
- 9: Füllgut, Material
- 10: Materialgrenze, Materialoberfläche
- 11: Boden der Messzelle bildende Messzellenwand
- 12: Behälter
- 13: Förderband
- 14: Förderkanal
- 15: Montageeinsatz
- 16: Deckel der Messzelle bildende Messzellenwand

## Patentansprüche

1. System zur Erkennung und/oder Volumenbestimmung von Körpern oder Stoffen aus dielektrischem und/oder leitfähigen Material (8, 9) innerhalb einer Messzelle (1), insbesondere in Art einer Förder- oder Transporteinrichtung (13, 14) oder eines Behälters (12), umfassend:
- wenigstens einen kapazitiven Sensor mit wenigstens einem flexiblen oder starren Isolator (3), wobei der Isolator (3) wenigstens teilweise mit mindestens einer Sensorelektrode (4, 7) ausgebildet ist, welche eine aktive Elektrodenoberfläche aufweist, wobei die mindestens eine Sensorelektrode (4, 7) in den Isolator (3) wenigstens teilweise integriert oder auf diesem aufgebracht ist, und
- die Messzelle (1) mit einem Innenraum und einer leitfähigen und/oder nichtleitfähigen Messzellenwand (2, 11, 16), die eine in den Innenraum gerichtete Oberfläche aufweist, wobei
der Sensor derart in eine Ausnehmung in der Messzellenwand (2, 11, 16) integriert ist, so dass die aktive Elektrodenoberfläche des Sensors wenigstens einen Teil der in den Innenraum gerichteten Oberfläche der Messzellenwand (2, 11, 16) ersetzt, **dadurch gekennzeichnet, dass**
der Sensor in die Ausnehmung (15) in der Messzellenwand derart integrierbar ist, dass
der Sensor in einem Montageeinsatz (15) zunächst montiert wird, und der Montageeinsatz (15) anschließend in der Messzellenwand (2, 11, 16) fixiert wird, oder
der Sensor in einem in der Messzellenwand (2, 11, 16) zunächst fixierten Montageeinsatz (15) anschließend montiert wird.

2. System nach Anspruch 1, **dadurch gekennzeichnet, dass** wenigstens die Sensorelektrode (4, 7), insbesondere der gesamte Sensor, in der Ausnehmung vollständig integriert ist.

3. System nach einem der Ansprüche 1 oder 2, **dadurch gekennzeichnet, dass** die Ausnehmung in der Oberfläche der Messzellenwand (2, 11, 16) eingebracht und so gestaltet ist, dass der Sensor über den Innenraum der Messzelle (1) in die Ausnehmung eingebracht ist oder, dass der Sensor von außerhalb der Messzelle (1) in die Ausnehmung eingebracht ist.

4. System nach einem der Ansprüche 1 bis 3, **gekennzeichnet dadurch, dass** die Oberfläche der Messzellenwand (11, 16), in welche die Ausnehmung für den Sensor eingebracht ist, Teil eines Deckels (16) oder eines Bodens (11) der Messzelle (1) ist.

5. System nach einem der Ansprüche 1 bis 4, wobei der Sensor eine Sensorelektronik (5a, 5b, 5c, 5d, 5e) aufweist, die mit der Sensorelektrode (4, 7), insbesondere elektrisch, verbunden ist und/oder eine kompakte Einheit, insbesondere in einem wenigstens teilweise geschlossenen Gehäuse, bildet.

6. System nach Anspruch 5 wobei die Sensorelektronik (5a, 5b, 5c, 5d, 5e) wenigstens teilweise, insbesondere vollständig, in dem Isolator (3) integriert und/oder in oder auf einer Leiterplatte untergebracht ist.

7. System nach einem der Ansprüche 1 bis 6, wobei die Sensorelektrode (4, 7) und/oder die Sensorelektronik (5a, 5b, 5c, 5d, 5e) mit einer Steuer-/Auswerteeinheit zu verbinden ist.

8. System nach einem der Ansprüche 5 bis 7, **gekennzeichnet dadurch, dass** die Sensorelektronik einen Speicher aufweist, in welchem Daten zur Identifizierung des Sensors und/oder sensorspezifische Daten abgelegt werden können, und der bei einer Kopplung des Sensors an die übergeordnete Steuer-/Auswerteeinheit eine eindeutige Identifizierung des Sensors durch die übergeordnete Steuer-/Auswerteeinheit ermöglicht und/oder dieser die sensorspezifischen Daten zur Verfügung stellt.

9. System nach einem der Ansprüche 5 bis 8, wobei die Sensorelektronik ausgebildet ist, um eine Messwertaufbereitung, insbesondere eine A/D-Wandlung und/oder eine Messwertverstärkung, und/oder eine Umschaltung von Elektrodenpotentialen und/oder eine Kompensation von parasitären Messeffekten zu unterstützen.

10. System nach einem der Ansprüche 5 bis 9, **gekennzeichnet dadurch, dass** wenigstens Teile der Sensorelektronik vom Sensor abgesetzt sind und/oder an einer Sensoraußenseite angeordnet sind.

11. System nach einem der Ansprüche 1 bis 10, **gekennzeichnet dadurch, dass** als eine Sensorzuleitung (6) zur Verbindung des Sensors mit einer Sensorelektronik und/oder der Steuer-/Auswerteeinheit ein koaxiales, triaxiales oder mehradriges Kabel vorgesehen ist.

12. System nach einem der Ansprüche 1 bis 11, **gekennzeichnet dadurch, dass** von dem wenigstens einen Sensor mindestens ein Sensor umfasst ist, dessen Sensorelektrode (4, 7) gegenüber der Messzellenwand (2, 11, 16) isoliert ist und an die unterschiedliche Potentiale anlegbar sind.

13. System nach einem der Ansprüche 1 bis 12, wobei wenigstens eine Umschalteinrichtung umfasst ist, welche die Umschaltung zwischen unterschiedlichen Potentialen an Sensorelektroden (4, 7), an die unterschiedliche Potentiale anlegbar sind, bewirkt, um tomographische Aussagen über die Materialverteilung zu ermitteln.

## Claims

1. System for the detection and/or volume determination of bodies or materials made of dielectric and/or conductive material (8, 9) within a measuring cell (1), in particular in the manner of a conveyor or transport device (13, 14) or a container (12), comprising:
- at least one capacitive sensor with at least one flexible or rigid insulator (3), the insulator (3) being at least partially formed with at least one sensor electrode (4, 7) having an active electrode surface, the at least one sensor electrode (4, 7) in the insulator (3) is at least partially integrated or applied to this, and
- the measuring cell (1) with an interior and a conductive and/or non-conductive measuring cell wall (2, 11, 16), having a surface directed into the interior, wherein
the sensor is so integrated into a recess in the measuring cell wall (2, 11, 16), so that the active electrode surface of the sensor replaces at least a part of the surface of the measuring cell wall (2, 11, 16) directed into the interior,
**characterized in that**,
the sensor can be integrated such into the recess (15) in the measuring cell wall, that the sensor firstly is mounted in a mounting insert (15) which is thereafter fixed in in the measuring cell wall (2, 11, 16),
or that
the sensor is mounted in a mounting insert (15) already being fixed in the measuring cell wall (2, 11, 16).

2. System according to claim 1, **characterized in that** at least the sensor electrode (4, 7), in particular the entire sensor, is completely integrated in the recess.

3. System according to claim 1 or 2, **characterized in that** the recess is introduced in the surface of the measuring cell wall (2, 11, 16) and is designed so that the sensor is introduced into the recess via the interior of the measuring cell (1) or **in that** the sensor is introduced from outside the measuring cell (1) into the recess.

4. System according to anyone of claims 1 to 3, **characterized in that** the surface of the measuring cell wall (11, 16), in which the recess for the sensor is introduced, is a part of a lid (16) or a bottom (11) of the measuring cell (1).

5. System according to anyone of claims 1 to 4, wherein the sensor includes a sensor electronics (5a, 5b, 5c, 5d, 5e), which is connected to the sensor electrode (4, 7), in particular electrically, and/or forms a compact unit, in particular in an at least partially closed housing.

6. System according to claim 5, wherein the sensor electronics (5a, 5b, 5c, 5d, 5e) is at least partially, in particular completely, integrated in the insulator (3) and/or is housed in or on a printed circuit board.

7. System according to anyone of claims 1 to 6, wherein the sensor electrode (4, 7) and/or the sensor electronics (5a, 5b, 5c, 5d, 5e) is to be connected to a control / evaluation unit.

8. System according to anyone of claims 5 to 7, **characterized in that** the sensor electronics has a memory, in which data for identifying the sensor and/or sensor-specific data can be stored, and which, by coupling the sensor to the higher-level control / evaluation unit, enables unambiguous identification of the sensor by the higher-level control / evaluation unit and/or provides the sensor-specific data.

9. System according to anyone of claims 5 to 8, wherein the sensor electronics is designed to assist a measured value preparation, in particular an A/D conversion and/or a measurement gain, and/or a switching of electrode potentials and/or a compensation of parasitic measurement effects.

10. System according to anyone of claims 5 to 9, **characterized in that** at least parts of the sensor electronics are offset from the sensor and/or arranged on a sensor outer side.

11. System according to anyone of claims 1 to 10, **characterized in that** a coaxial, triaxial or multi-core cable is provided as a sensor feed line (6) for connecting the sensor to a sensor electronics and/or the control / evaluation unit.

12. System according to anyone of claims 1 to 11, **characterized in that** at least one sensor is comprised by the at least one sensor whose sensor electrode (4, 7) is insulated from the measuring cell wall (2, 11, 16) and to which different potentials can be applied.

13. System according to anyone of claims 1 to 12, wherein at least one switching device is included, which causes the switching between different potentials on sensor electrodes (4, 7), to which different potentials can be applied, to determine tomographic statements about the material distribution.

## Revendications

1. Système pour la détection et/ou la détermination de volumes de corps ou de substances en matériau diélectrique et/ou conducteur (8, 9) à l'intérieur d'une cellule de mesure (1), en particulier du genre d'un système de convoyage ou de transport (13, 14) ou d'un conteneur (12), comprenant :
- au moins un capteur capacitif avec au moins un isolant (3) souple ou rigide, dans lequel l'isolant (3) est au moins partiellement constitué d'au moins une électrode (4, 7) de capteur pourvue d'une surface d'électrode active, ladite au moins une électrode (4, 7) de capteur étant au moins partiellement incorporée à l'isolant (3) ou appliquée sur celui-ci, et
- la cellule de mesure (1) avec un espace intérieur et une paroi (2, 11, 16) de cellule de mesure conductrice et/ou non conductrice, laquelle présente une surface dirigée vers l'intérieur, où
le capteur est intégré dans un évidement de la paroi (2, 11, 16) de cellule de mesure, de sorte que la surface d'électrode active du capteur remplace au moins une partie de la surface de la paroi (2, 11, 16) de cellule de mesure dirigée vers l'intérieur, **caractérisé en ce que**
le capteur peut être intégré dans l'évidement (15) de la paroi de cellule de mesure de telle manière que :
le capteur est d'abord monté dans une pièce de montage (15), et la pièce de montage (15) est ensuite fixée dans la paroi (2, 11, 16) de cellule de mesure, ou
le capteur est ensuite monté dans la pièce de montage (15) d'abord fixée dans la paroi (2, 11, 16) de cellule de mesure.

2. Système selon la revendication 1, **caractérisé en ce qu'**au moins l'électrode (4, 7) de capteur, en particulier tout le capteur, est entièrement intégrée dans l'évidement.

3. Système selon l'une des revendications 1 et 2, **caractérisé en ce que** l'évidement est ménagé à la surface de la paroi (2, 11, 16) de cellule de mesure et prévu de telle sorte que le capteur est mis en place dans l'évidement par l'espace intérieur de la cellule de mesure (1), ou que le capteur est mis en place dans l'évidement depuis l'extérieur de la cellule de mesure (1).

4. Système selon l'une des revendications 1 à 3, **caractérisé en ce que** la surface de la paroi (11, 16) de cellule de mesure dans laquelle est ménagé l'évidement pour le capteur, fait partie d'un couvercle (16) ou d'un fond (11) de la cellule de mesure (1).

5. Système selon l'une des revendications 1 à 4, dans lequel le capteur comporte une électronique de détection (5a, 5b, 5c, 5d, 5e) reliée, en particulier électriquement, à l'électrode (4, 7) de capteur, et/ou forme une unité compacte, en particulier dans un boîtier au moins partiellement clos.

6. Système selon la revendication 5, dans lequel l'électronique de détection (5a, 5b, 5c, 5d, 5e) est au moins partiellement, en particulier entièrement, intégrée à l'isolant (3) et/ou est présentée dans ou sur une carte de circuit imprimé.

7. Système selon l'une des revendications 1 à 6, dans lequel l'électrode (4, 7) de capteur et/ou l'électronique de détection (5a, 5b, 5c, 5d, 5e) doit être raccordée à une unité de commande/d'analyse.

8. Système selon l'une des revendications 5 à 7, **caractérisé en ce que** l'électronique de détection comporte une mémoire dans laquelle peuvent être stockées des données pour l'identification du capteur et/ou des données spécifiques au capteur, et qui permet une identification univoque du capteur par l'unité de commande/d'analyse de niveau supérieur en cas de couplage du capteur à l'unité de commande/d'analyse de niveau supérieur et/ou met les données spécifiques au capteur à la disposition de celle-ci.

9. Système selon l'une des revendications 5 à 8, dans lequel l'électronique de détection est prévue pour assister une préparation de valeur de mesure, en particulier une conversion analogique/numérique et/ou une amplification de valeur de mesure, et/ou une commutation de potentiels d'électrode et/ou une compensation d'effets de mesure parasites.

10. Système selon l'une des revendications 5 à 9, **caractérisé en ce qu'**au moins des parties de l'électronique de détection sont détachées du capteur et/ou sont disposées sur une face extérieure du capteur.

11. Système selon l'une des revendications 1 à 10, **caractérisé en ce qu'**un câble coaxial, triaxial ou à plusieurs brins est prévu comme ligne de capteur (6) pour la liaison du capteur à une électronique de détection et/ou à l'unité de commande/d'analyse.

12. Système selon l'une des revendications 1 à 11, **caractérisé en ce qu'**au moins un capteur est compris dans ledit au moins un capteur, dont l'électrode (4, 7) de capteur est isolée par rapport à la paroi (2, 11, 16) de cellule de mesure et à laquelle des potentiels différents sont applicables.

13. Système selon l'une des revendications 1 à 12, dans lequel au moins un dispositif de commutation est compris, opérant la commutation entre différents potentiels vers des électrodes (4, 7) de capteur auxquelles des potentiels différents sont applicables, pour déterminer des caractéristiques tomographiques relatives à la distribution du matériau.
